Europäisches Patentamt

European Patent Office

Office européen des brevets

(11) Veröffentlichungsnummer: **0 328 762**
**A2**

## (12) EUROPÄISCHE PATENTANMELDUNG

(21) Anmeldenummer: 88120617.1

(22) Anmeldetag: 09.12.88

(51) Int. Cl.⁴: **G01F 25/00**

(30) Priorität: 17.02.88 DE 3804893

(43) Veröffentlichungstag der Anmeldung:
23.08.89 Patentblatt 89/34

(84) Benannte Vertragsstaaten:
AT BE CH DE ES FR GB GR IT LI LU NL SE

(71) Anmelder: **RICKI LABOR SYSTEME GmbH**
**Johanna-Baltz-Strasse 28**
**D-5760 Arnsberg 2(DE)**

(72) Erfinder: **Willms, Joachim**
**Bückerweg 1**
**D-4773 Möhnesee 2(DE)**

(74) Vertreter: **Patentanwälte Müller-Boré, Deufel,**
**Schön, Hertel, Lewald, Otto**
**Postfach 26 02 47 Isartorplatz 6**
**D-8000 München 26(DE)**

(54) **Vorrichtung zur Überprüfung der von einem Dispenser abgegebenen Flüssigkeitsmenge.**

(57) Zur Überprüfung der von einem Dispenser abgegebenen Flüssigkeitsmenge ist ein Ständer vorgesehen, an welchem Pipetten (36, 38, 40) angeordnet sind, die an ihrem unteren Ende Dreiwegehähne (56, 58, 60) aufweisen. Unterhalb der Pipetten ist an dem Ständer ein Flüssigkeitsbehälter (50) vorgesehen, in welchen der Ansaugschlauch (48) eines zu überprüfenden Dispensers (46) hineinragt. Der Dispenser (46) kann mit einer der Pipetten (36, 38, 40) über Verbindungsschläuche (70, 74, 76) verbunden werden. Zu Beginn einer Überprüfung des Dispensers wird über den Dispenser Flüssigkeit in eine Prüfpipette (36) abgegeben und durch Betätigung des Dreiwegehahns (56) wird soviel Flüssigkeit aus der Pipette wieder abgelassen, bis die Miniskusmarke sich auf den Nullpunkt (104) eingestellt hat. Nach erneuter Betätigung des Dispensers (46) wird an der Skala die Miniskusmarke (100) abgelesen, die wenn der Dispenser exakt arbeitet, der Sollmenge des Dispensers entspricht.

Fig. 1

## Vorrichtung zur Überprüfung der von einem Dispenser abgegebenen Flüssigkeitsmenge

Die Erfindung betrifft eine Vorrichtung zur Überprüfung der von einem Dispenser abgegebenen Flüssigkeitsmenge, mit mindestens einem an einem Ständer angeordneten Röhrchen.

Dispenser werden insbesondere im Laborbetrieb verwendet. Sie dienen als kolbenbetriebener Stech- oder Saugheber zum Ansaugen von Flüssigkeiten und zum Abgeben von Flüssigkeiten mit einem bestimmten Volumen. Der Kolbenhub ist bei derartigen Dispensern so ausgelegt, daß immer dieselbe Menge angesaugt und abgegeben wird. Während des normalen Gebrauchs erfolgt durch die Laborantin oder den Laboranten keine Überprüfung des Flüssigkeitsvolumens, das mit einem derartigen Dispenser abgegeben wird. Da im Laufe der Zeit durch Verschleiß und/oder Verschmutzung eine Veränderung in dem aufgenommenen Volumen von beispielsweise 0,5 ml bis 10,0 ml eintreten kann, werden in einem normalen Labor eingesetzte Dispenser zur einer Überprüfungsstelle eingeschickt, in welcher sie durch Nachwägung der aufgenommenen Menge überprüft werden. Eine derartige Vorgehensweise ist aber sehr unpraktisch, da die Dispenser dazu aus dem Labor entfernt werden müssen. Sie sind dann für den Gebrauch nicht vorhanden und die Überprüfung verursacht Kosten.

Aus der DE-OS P 35 07 131.1-52 ist eine Vorrichtung zur Überprüfung der von einem Dispenser abgegebenen Flüssigkeitsmenge bekannt, bei welcher an einem mit Skalen versehenen Ständer verschiebbare Glasröhrchen angeordnet sind. Ein Glasröhrchen wird mit dem Dispenser verbunden und eine Flüssigkeitsmenge wird in das Röhrchen mittels des Dispensers eingeleitet. Die sich im Glasröhrchen ausbildende Miniskusmarke wird dann durch Verschieben des Glasröhrchens auf den Nullpunkt der Skala eingestellt und durch erneute Betätigung des Dispensers wird in das Glasröhrchen die Flüssigkeitsmenge eingeleitet, die bei dem eingestellten Hub von dem Dispenser abgegeben wird. Diese Flüssigkeitsmenge kann nun direkt an der Skala abgelesen werden. Entspricht die Höhe der Miniskusmarke dem Sollwert des Dispensers, so ist eine Überarbeitung des Dispensers nicht erforderlich. Liegt dagegen die Miniskusmarke unter oder über dem Sollwert, so muß der Dispenser überholt oder bei großen Abweichungen ausgetauscht werden. Diese bekannte Vorrichtung gestattet zwar die Überprüfung des Dispensers im Labor mit einfachen Mitteln, jedoch ist die Handhabung der Vorrichtung nicht optimal.

Der Erfindung liegt die Aufgabe zugrunde, eine gattungsgemäße Vorrichtung derart auszubilden, daß durch einfache Handhabung im Labor eine Überprüfung von Dispensern erfolgen kann.

Diese Aufgabe wird erfindungsgemäß dadurch gelöst, daß an dem Ständer ein Element vorzugsweise in Form eines elastischen Stutzens zur Anordnungs eines Dispensers vorgesehen ist, daß das Ansaugrohr des Dispensers durch den Stutzen in einen auf dem Boden des Ständers angeordneten Flüssigkeitsbehälter geführt ist, daß das mindestens eine Röhrchen eine auf Einguß geeichte Pipette ist, daß an dem unteren Ende der Pipette ein Dreiwegehahn angeordnet ist, daß zwischen dem Dreiwegehahn und der Ausstoßkanüle des Dispensers ein Verbindungsschlauch anbringbar ist, und daß ein Auslaß des Dreiwegehahns in den Flüssigkeitsbehälter gerichtet ist.

Bei der erfindungsgemäßen Vorrichtung erfolgt durch die Anordnung von Dispenser, Flüssigkeitsbehälter und den Meßröhrchen ein geschlossener Flüssigkeitskreislauf. Nach Anordnen des Dispensers an dem Ständer der Vorrichtung und Verbinden des Dispensers mit einer für die Überprüfung geeigneten geeichten Pipette an dem Ständer kann durch Verbinden der Pipette mit dem Verbindungsschlauch über den Dreiwegehahn der Dispenser betätigt werden, wonach Flüssigkeit über das Ansaugrohr angesaugt und anschließend über den Verbindungsschlauch in die Prüfpipette abgegeben wird. In der Prüfpipette bildet sich eine Miniskusmarke aus.

Nach Verdrehen des Dreiwegehahns wird die Verbindung der Pipette zu dem Dispenser geschlossen und die in der Pipette enthaltene Flüssigkeit kann über den Dreiwegehahn in den darunter angeordneten Behälter soweit abgelassen werden, bis sich an der Nullmarke der Skala der Pipette die Miniskusmarke der Flüssigkeit exakt eingependelt hat. Jetzt wird der Dreiwegehahn an der Prüfpipette geschlossen, so daß diese weder Verbindung zu dem Flüssigkeitsauslaß in den darunter angeordneten Flüssigkeitsbehälter noch zu dem Verbindungsschlauch zu dem Dispenser aufweist. Der Dispenser wird nun mit dem zu überprüfenden Hub betätigt und nach Ansaugen von Flüssigkeit aus dem Flüssigkeitsbehälter wird der Dreiwegehahn verdreht, so daß eine Verbindung zwischen Dispenser und Prüfpipette vorliegt. Danach wird der Kolben des Dispensers gedrückt, so daß die Flüssigkeit in die Pipette eingeleitet wird. Nach Beendigung der Dispenserbetätigung stellt sich in der Pipette eine Miniskusmarke ein, die, wenn der Dispenser exakt arbeitet, an der Skala genau die an dem Dispenser eingestellte Flüssigkeitsmenge anzeigt. Durch Betätigung des Dreiwegehahns kann erneut soviel Flüssigkeit abgelassen werden, bis die Miniskusmarke in der Prüfpipette wieder auf den Nullpunkt gesetzt ist. Jetzt kann der Dispenser mit einer anderen eingestellten Volumenmenge überprüft werden. Die anfängliche Einleitung von Flüssigkeit in die Prüfpipette ohne Beachtung des von dem Dispenser abgegebenen Volumens dient dazu, die Prüfpipette im Inneren zu benetzen und den Verbindungsschlauch und die Pipette zu entlüften, so daß exakte Messungen möglich sind.

Gemäß bevorzugten Ausführungsformen ist eine Skalenleiste auf der Pipette oder hinter der Pipette an dem Ständer vorgesehen.

Vorzugsweise ist die Pipette mit dem Dreiwegehahn verschmolzen. Pipette und Dreiwegehahn bestehen vorzugsweise aus Glas.

Zur Überprüfung eines weiten Bereichs von Dispensern sind vorzugsweise drei Pipetten mit unterschiedlichen Volumina an dem Ständer angeordnet.

Vorzugsweise sind in dem Ständer Öffnungen mit elastischer Einfassung zur Aufnahme der Enden der Verbindungsschläuche zwischen Pipette und Dispenser vorgesehen.

Gemäß einer bevorzugten Ausführungsform weist der Ständer an dem oberen und dem unteren Ende im Querschnitt etwa U-förmige Abschnitte auf, die Enden der Pipetten sind durch die sich gegenüberliegenden Flächen der U-förmigen Abschnitte geführt und in dem unteren U-förmigen Abschnitt ist der Flüssigkeitsbehälter angeordnet. Damit ergibt sich eine kompakte Gestalt der Prüfvorrichtung, die in einem Labor ohne zu stören aufbewahrt und die einfach und leicht gehandhabt werden kann.

Ein Ausführungsbeispiel der Erfindung wird nachstehend anhand der Zeichnung näher erläutert. Es zeigt:

Fig. 1 eine Vorrichtung zur Überprüfung der von einem Dispenser abgegebenen Flüssigkeitsmenge in Vorderansicht, und

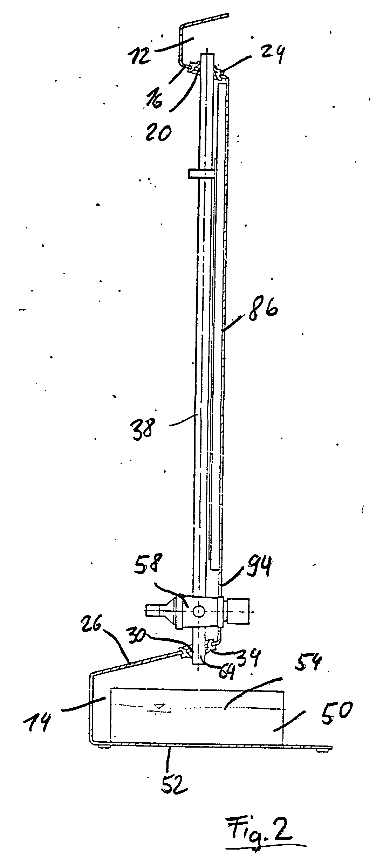

Fig. 2 einen Schnitt längs der Linie II-II von Fig. 1.

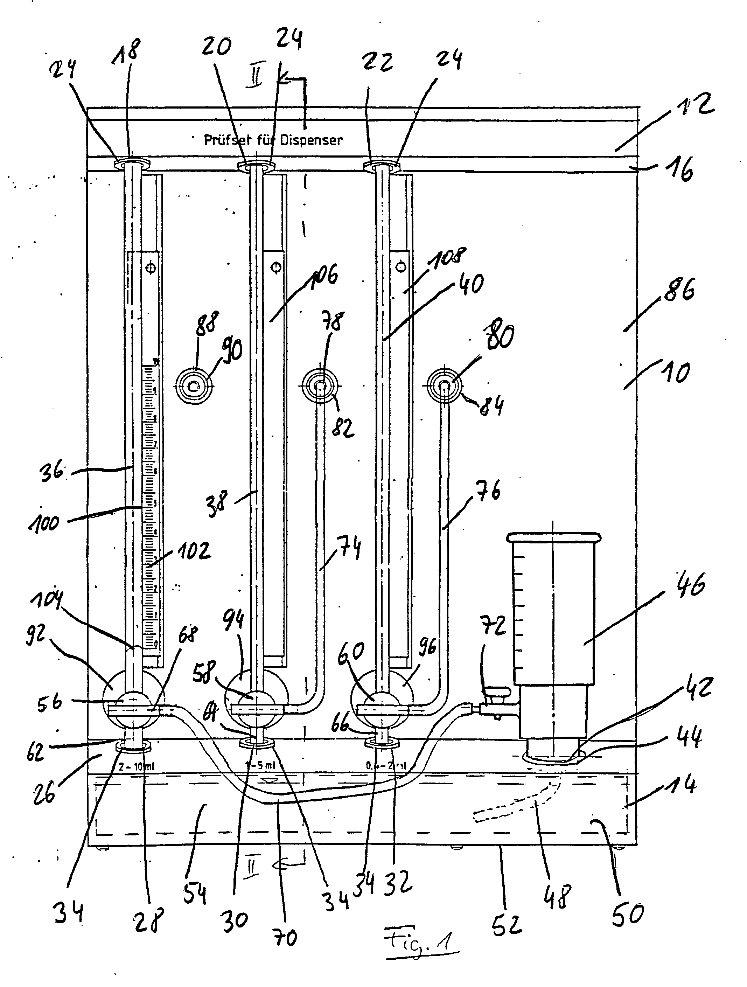

Fig. 1 zeigt einen Ständer 10 mit einem oberen im Querschnitt etwa U-förmigen Bereich 12 und einem unteren, im

Querschnitt ebenfalls etwa U-förmigen Bereich 14, der gegenüber dem oberen Bereich 12 aber längere Schenkel aufweist. An der nach unten weisenden Schenkelfläche 16 des oberen U-förmigen Bereichs 12 sind Durchgangsöffnungen 18, 20, 22 angeordnet, in denen elastische Manschetten 24 eingesetzt sind. In der nach oben gerichteten Schenkelfläche 26 des unteren U-förmigen Abschnitts 14 sind Durchgangsöffnungen 28, 30, 32 ausgebildet, in welchen elastische Manschetten 34 eingesetzt sind. Gehalten von den Manschetten 24 und 34 in den Durchgangsöffnungen 18 und 28 ist eine Prüfpipette 36, die auf Einguß geeicht ist und beispielsweise zur Überprüfung von Flüssigkeitsmengen zwischen 2 bis 10 ml geeignet ist. Eine Prüfpipette 38 zur Überprüfung von Flüssigkeitsmengen zwischen 1 bis 5 ml ist mit ihren Enden in den Durchgangsöffnungen 20 und 30 aufgenommen und wird über die elastischen Manschetten 24 und 34 gehalten. Eine dritte Prüfpipette 40 ist mit ihren Enden durch die Durchgangsöffnungen 22 und 32 geführt und wird dort von den elastischen Manschetten 24 und 34 gehalten.

In der Schenkelfläche 26 ist eine weitere Durchgangsöffnung 42 vorgesehen, in welcher ein elastischer Stutzen oder eine elastische Manschette 44 eingesetzt ist. Die Durchgangsöffnung 42 dient zur Anordnung eines Dispensers 46, der mit seinem Ansaugende in der Manschette 44 gehalten wird. Ein Ansaugschlauch 48 des Dispensers 46 ist durch die Manschette 44 und die Durchgangsöffnung 42 nach unten geführt und ragt in einen Flüssigkeitsbehälter 50, der auf der unteren Schenkelfläche 52 des U-förmigen Abschnittes 14, die gleichzeitig die Grundfläche der Vorrichtung 10 bildet, aufsitzt. In dem Behälter 50 ist eine Flüssigkeit 54 enthalten.

Das untere Ende der Prüfpipette 36 ist mit einem Dreiwegehahn 56 verschmolzen. Die Prüfpipette 38 weist am unteren Ende einen Dreiwegehahn 58 und die Prüfpipette 40 einen Dreiwegehahn 60 auf. Das durch die Durchgangsöffnung 28 geführte untere Ende der Prüfpipette 36 ist gleichzeitig ein Auslaß 62, der in den Flüssigkeitsbehälter 50 gerichtet ist. Ein entsprechender Auslaß 64 ist an der Prüfpipette 38 und ein Auslaß 66 an der Prüfpipette 40 unterhalb des Dreiwegehahns 58 bzw. 60 angeordnet und in den Flüssigkeitsbehälter 50 gerichtet. Eine Zufuhröffnung 68 des Dreiwegehahns 56 ist mittels eines Schlauches 70 mit geringem Durchmesser mit der Auslaßkanüle 72 des Dispensers 46 verbunden. An dem Dreiwegehahn 58 der Pipette 38 ist ein entsprechender Schlauch 74 und an dem Dreiwegehahn 60 der Pipette 40 ein Schlauch 76 angeordnet. Mit diesen Schläuchen 74 und 76 sind die Pipetten 38 und 40 mit dem Dispenser 46 verbindbar. Da die Pipetten 38 und 40 bei dem in der Figur gezeigten Ausführungsbeispiel nicht benutzt werden, sind die Enden der Schläuche 74 und 76 durch mit elastischen Manschetten 78 bzw. 80 versehene Durchgangsöffnungen 82 bzw. 84 in der Verbindungswand 86 zwischen dem U-förmigen Abschnitt 12 und dem U-förmigen Abschnitt 14 gesteckt. Eine entsprechende mit einer Manschette 88 versehene Öffnung 90 ist in der Verbindungswand 86 für den Schlauch 70 vorgesehen. Die Dreiwegehähne 56, 58 und 60 weisen an der Vorderseite zur Betätigung kleine Handgriffe auf und sind mit ihrem hinteren Ende durch Öffnungen 92, 94 und 96 in der Verbindungswand 86 geführt.

Zur Überprüfung der von dem Dispenser 46 abgegebenen Flüssigkeitsmenge wird der Dispenser 46 mit seinem Ansaugende in die elastische Manschette 44 gesteckt. Über den in den Flüssigkeitsbehälter 50 ragenden Ansaugschlauch 48 wird durch Betätigung des Kolbens des Dispensers 46 Flüssigkeit in den Dispenser eingesaugt. Durch Drücken des Kolbens in den Dispenser wird die Flüssigkeit aus dem Dispenser 46 über den Schlauch 70 in die Prüfpipette 36, die wie die Pipetten 38 und 40 auf Einguß geeicht ist, eingeleitet, wenn der Dreiwegehahn derart geschaltet ist, daß die Verbindung zwischen Pipette 36 und Schlauch 70 offen ist. Durch Einleiten der Flüssigkeit mit irgendeinem Volumen in die Prüfpipette 38 wird das Innere der Prüfpipette 38 benetzt und gleichzeitig werden die Pipette 36 und der Verbindungsschlauch 70 entlüftet. Durch Betätigung des Dreiwegehahns 56 wird die Verbindung zu dem Verbindungsschlauch 70 geschlossen und soviel Flüssigkeit aus der Pipette 36 über den Auslaß 62 in den Flüssigkeitsbehälter 50 abgelassen, bis der Miniskus der Flüssigkeit in der Pipette 36 genau auf dem Nullpunkt 104 am unteren Ende der Skala eingestellt ist. Jetzt wird die Prüfpipette 36 über den Dreiwegehahn geschlossen und durch erneute Betätigung des Dispensers wird nunmehr eine zu überprüfende Flüssigkeitsmenge über den Ansaugschlauch 48 aus dem Flüssigkeitsbehälter 50 angesaugt. Durch Verdrehen des Dreiwegehahns 56 wird die Verbindung zwischen Pipette 36 und Verbindungsschlauch 70 wieder hergestellt und die von dem Dispenser angesaugte Flüssigkeitsmenge wird über den Verbindungsschlauch 70 in die Pipette 36 eingeleitet. Wenn an dem Dispenser 46 eine Flüssigkeitsmenge von 5 ml eingestellt war, muß die Miniskusmarke 100 exakt bei dem Wert 5 der Skala 102 der Pipette 36 stehen. Ist dies der Fall, so kann an dem Dispenser eine andere Flüssigkeitsmenge eingestellt werden. Durch Öffnen des Dreiwegehahns wird aus der Pipette 36 soviel Flüssigkeit abgelassen, bis der Miniskus sich auf der Nullmarke 104 der Skala 102 eingestellt hat. Danach kann der Prüfvorgang erneut durchgeführt werden, bis der Dispenser 46 mit sämtlichen einstellbaren Volumina durchgeprüft ist.

Wenn kleinere Volumina zu prüfen sind, wird nicht die Pipette 36 mit einem Dispenser verbunden, sondern es werden dazu die Pipetten 38 oder 40 verwendet, denen Skalen 106 bzw. 108 zugeordnet sind. Wenn sämtliche Dispenser überprüft worden sind, kann die Flüssigkeit aus dem Behälter 50 entnommen und die Vorrichtung abgestellt werden, bis eine erneute Überprüfung von Dispensern vorgenommen werden muß.

## Ansprüche

1. Vorrichtung zur Überprüfung der von einem Dispenser abgegebenen Flüssigkeitsmenge, mit mindestens einem an einem Ständer angeordneten Röhrchen, dadurch **gekennzeichnet,** daß an dem Ständer (10) ein Element (44) zur Anordnung eines Dispensers (46) vorgesehen ist, daß das Ansaugrohr (48) des Dispensers (46) durch das Element (44) in einen auf dem Boden (52) des Ständers (10) angeordneten Flüssigkeitsbehälters (50) geführt ist, daß das mindestens eine Röhrchen (36, 38, 40) eine auf Einguß geeichte Pipette ist, daß an dem unteren Ende der Pipette (36, 38, 40) ein Dreiwegehahn (56, 58, 60) angeordnet ist, daß zwischen dem Dreiwegehahn (56, 58, 60) und der Ausstoßkanüle (72) des Dispensers (46) ein Verbindungsschlauch (70, 74, 76) anbringbar ist, und daß ein Auslaß (62, 64, 66) des Dreiwegehahns (56, 58, 60) in den Flüssigkeitsbehälter (50) gerichtet ist.

2. Vorrichtung nach Anspruch 1, dadurch **gekennzeichnet,** daß eine Skalenleiste (102, 106, 108) auf der Pipette oder hinter der Pipette (36, 38, 40) an dem Ständer (10) vorgesehen ist.

3. Vorrichtung nach Anspruch 1 oder 2, dadurch **gekennzeichnet,** daß die Pipette (36, 38, 40) mit dem Dreiwegehahn (56, 58, 60) verschmolzen ist.

4. Vorrichtung nach einem der Ansprüche 1 bis 3, dadurch **gekennzeichnet,** daß drei Pipetten (36, 38, 40) mit unterschiedlichen Volumina an dem Ständer (10) angeordnet sind.

5. Vorrichtung nach einem der Ansprüche 1 bis 4, dadurch **gekennzeichnet,** daß in einer Wand (86) des Ständers Öffnungen (90, 82, 84) mit elastischer Einfassung zur Aufnahme der Enden der Verbindungsschläuche (70, 74, 76) zwischen Pipette (36, 38, 40) und Dispenser (46) vorgesehen sind.

6. Vorrichtung nach einem der Ansprüche 1 bis 5, dadurch **gekennzeichnet,** daß der Ständer an dem oberen und unteren Ende im Querschnitt etwa U-förmige Abschnitte (12, 14) aufweist, daß die Enden der Pipetten (36, 38, 40) durch die sich gegenüberliegenden Flächen (16, 26) der U-förmigen Abschnitte (12, 14) geführt sind, und daß in dem unteren U-förmigen Abschnitt (14) der Flüssigkeitsbehälter (50) angeordnet ist.

7. Vorrichtung nach Anspruch 1 bis 6, dadurch **gekennzeichnet,** daß das Element zur Anordnung des Dispensers (46) ein elastischer Stutzen (44) ist, der in der Fläche (26) des unteren U-förmigen Abschnittes (14) angeordnet ist.

EP 0 328 762 A2

Prüfset für Dispenser

Fig. 1

Fig. 2